# EUROPEAN PATENT SPECIFICATION

(11) **EP 2 168 399 B1**
(45) Date of publication and mention of the grant of the patent: **12.01.2011**
(21) Application number: 08710067.3
(22) Date of filing: 15.02.2008
(51) Int. Cl.: H04W 4/00

(54) **PROVIDING SERVICES TO A MOBILE DEVICE IN A PERSONAL NETWORK**
BEREITSTELLUNG VON DIENSTEN FÜR EINE MOBILE EINRICHTUNG IN EINEM PERSÖNLICHEN NETZ
FOURNITURE DE SERVICES À UN DISPOSITIF MOBILE DANS UN RÉSEAU PERSONNEL

(30) Priority: 23.07.2007 US 951292 P; 14.09.2007 US 855341
(43) Date of publication of application: 31.03.2010
(73) Proprietor: Sony Ericsson Mobile Communications AB, 221 88 Lund (SE)
(72) Inventor: LARSSON, Bo Håkan, SE-217 64 Malmö (SE); STAVENOW, Bengt Gunnar, S-SE- 224 72 Lund (SE); RITZAU, Jan Robert Tobias, S-SE-240 14 Veberöd (SE); BENGTSSON, Henrik Sven, S-SE-227 38 Lund (SE); ÖSTSJÖ, Anders Wilhelm, S-SE-237 36 Bjärred (SE); MINÖR, Sten Håkan, S-SE-227 38 Lund (SE)
(74) Representative: VALEA AB
(86) International application number: PCT/IB2008/050571
(87) International publication number: WO 2009/013641

(56) References cited:
- EP-A- 1 450 517
- GB-A- 2 360 914
- BERGER S ET AL: "Topics in in-how networking - Ubiquitous computing in home networks" IEEE COMMUNICATIONS MAGAZINE, IEEE SERVICE CENTER, PISCATAWAY, US, vol. 41, no. 11, 1 November 2003 (2003-11-01), pages 128-135, XP011103285 ISSN: 0163-6804

## Description

### BACKGROUND

### Technical Field

Embodiments described herein may relate generally to providing services by devices associated with a personal network and may relate, more particularly, to providing services by a personal network to a mobile device.

### Description of Related Art

Devices coupled to a network may provide a myriad of services. For example, a home network may include a device to play music (e.g., a stereo), display videos (e.g., a television), print documents, store data (such as video or music), or retrieve data. Current technology does not provide adequate management of the services that these devices provide to users.

Document IEEE COMMUNICATIONS MAGAZINE, IEEE SERVICE CENTER, PISCATAWAY, US, vol. 41 no. 11 pages 128 - 135, ISSN: 0163-6804, 01-11-2003 BERGER S ET AL: "Topics in in-how networking - Ubiquitous computing in home networks**"** discloses a SIP based home network using SLP for service discovery (hotel as an example); after location determination (GPS, BT beacon) a request is sent to the SIP server for getting a list of available services (according to the location and admission rules e.g. a guest in his room); after providing said list the user can select an available service (video, audio etc.).

Document EP1450517 A discloses a short range transceiver in an ad-hoc network, capable for device detection and the affiliated services offered, ranking of the candidate devices according to any policies or filter criteria and subsequently selecting the desired service; this can be accomplished as a background process.

### SUMMARY

It is an object of the invention to provide a method performed by a device in a personal network according to claim 1 and system according to claim 8. Preferred embodiments are defined in the dependent claims.

### BRIEF DESCRIPTION OF THE DRAWINGS

The accompanying drawings, which are incorporated in and constitute a part of this specification, illustrate one or more embodiments and, together with the description, explain the embodiments. In the drawings,
FIG. 1 shows an exemplary personal network for embodiments described herein;
FIG. 2 shows an exemplary environment for embodiments described herein;
FIG. 3 is a block diagram of exemplary components of a device;
FIG. 4 is a block diagram of an exemplary device table;
FIG. 5 is a block diagram of an exemplary user table;
FIG. 6 is a block diagram of an exemplary role table; and
FIGS. 7 and 8 are flowcharts of exemplary processes for providing services in embodiments described herein.

### DETAILED DESCRIPTION

The following detailed description refers to the accompanying drawings. The same reference numbers in different drawings may identify the same or similar elements. Also, the following detailed description does not limit the scope of the claims. Rather, the claims define the scope of the inventions described herein.

### OVERVIEW

Embodiments described herein allow users to define a "personal network." A personal network is a collection of devices that provide services to users. Services may include playing music or movies, viewing pictures, printing documents, storing movies and music, among other things. In one embodiment, when a user requests a service, the system may recommend one or more devices best suited and/or more likely to adequately provide the requested service. For example, a recommended device and service may include recommending the stereo in the same room for playing music - as opposed to recommending a stereo in a distant room or another building. As another example, the recommended device and service may include recommending a printer at home for printing a document when the user is at home - as opposed to recommending a printer at work for printing a document when the user is at home.

The devices associated with the personal network and the services that these devices provide to the users may be defined. In addition, the users allowed to access the services and devices may also be defined. Further, the users allowed to access the services and devices may have limited roles and privileges to access the devices and services. For example, a guest to a personal network may not have full access to the devices and services associated with the personal network.

### EXEMPLARY PERSONAL NETWORK

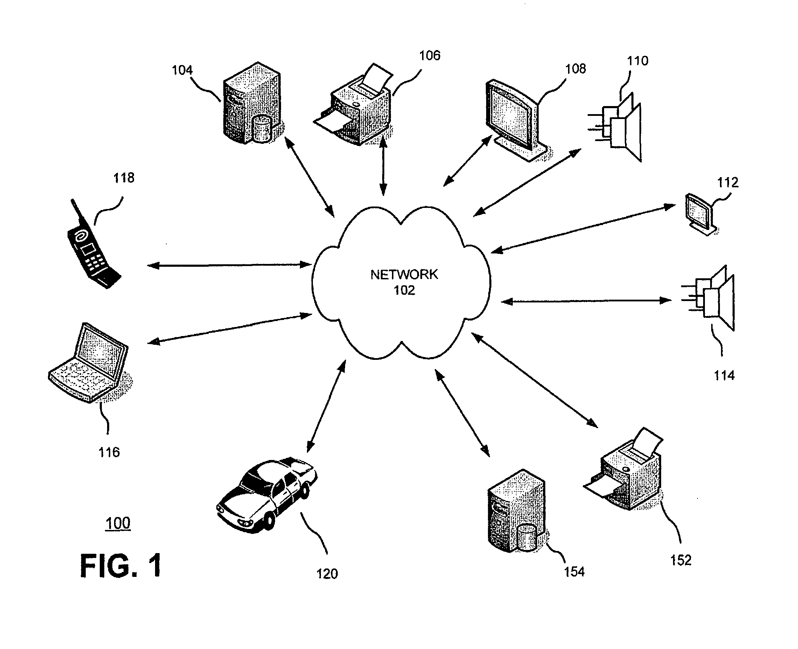

FIG. 1 shows an exemplary personal network 100 in which embodiments described herein may be implemented. As shown, personal network 100 may include a network 102 communicating with a group of devices 104-154. These devices may include, among other things, a home server 104, a home printer 106, a wide-screen TV 108 (e.g., a display or monitor), a first pair of speakers 110 (first speakers 110), a small-screen TV 112 (e.g., a display or monitor), a second pair of speakers 114 (second speakers 114), a laptop 116, a mobile phone 118, a car 120, a work printer 152, and a work server 154. In other embodiments, personal network 100 may include more, fewer, or different components. Moreover, one or more devices 104-154 associated with personal network 100 may perform one or more functions of any other device of personal network 100. Furthermore, one or more of devices 104-154 may be remotely located from each other. Although FIG. 1 shows devices 104-154 coupled to network 102, devices 104-154 may also be coupled with each other and may be able to communicate directly with each other.

Besides the devices shown in FIG. 1 coupled to network 102, coupled devices may include any computational device, including among other things: a camcorder, a personal computer; a telephone, such as a radio telephone; a personal communications system (PCS) terminal that may combine a cellular radiotelephone with data processing, facsimile, and/or data communications capabilities; an electronic notepad; a personal music player (PMP); a personal digital assistant (PDA) that may provide Internet/intranet access, web browser, organizer, calendar, and a global positioning system (GPS).

Network 102 may include the Internet, an ad hoc network, a local area network (LAN), a wide area network (WAN), a metropolitan area network (MAN), a cellular network, a public switched telephone network (PSTN), any other network, or combinations of networks.

Home server 104 may include one or more computer systems for hosting server programs, databases, and/or applications. Home server 104 may receive a request for uploading or downloading data from other devices, such as devices coupled to network 102, process the request, and transmit or receive data to and from other devices, such as devices coupled to network 102. Home server 104 may be located in a home of a user, but home server 104 may be located elsewhere.

Printer 106 and printer 152 may include any black and white or color printer, such as a laser printer, ink-jet printer, dot matrix printer, etc. Wide-screen display 108 and small-screen display 112 may include a liquid crystal display (LCD), a cathode ray tube (CRT), a plasma display, etc. First speakers 110 and second speakers 114 may include one or more speakers that output audio signals, such as stereo or mono audio. Laptop 116 may include any portable computing device, PDA, PMP, etc. Mobile phone 118 may include any portable computing device, PDA, PMP, etc. Car 120 may include any mobile transportation device, automobile, truck, etc.

Work server 154 may include one or more computer systems for hosting server programs, databases, and/or applications. Work server 154 may receive a request for uploading or downloading data from other devices, such as devices coupled to network 102, process the request, and transmit or receive data to and from other devices, such as devices coupled to network 102. Work server 154 may be located in a work place of a user, but work server 154 may be located elsewhere.

### EXEMPLARY ENVIRONMENT

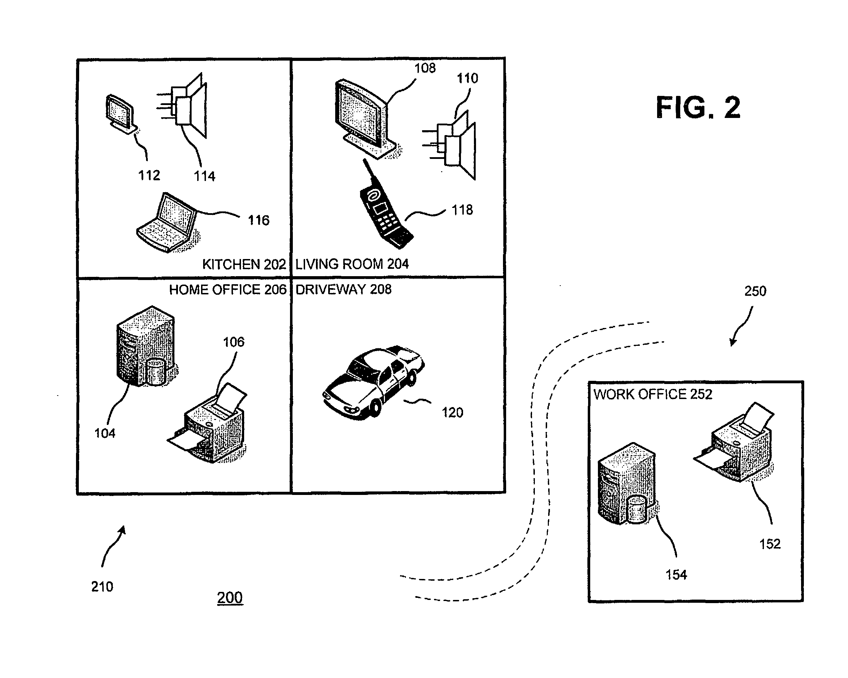

FIG. 2 is a diagram of an exemplary environment 200 in which embodiments disclosed herein may be implemented. Environment 200 may include a home environment 210 and a work environment 250. Environment 200 may include more, fewer, or different environments than shown in FIG. 2. Home environment may include a kitchen 202, a living room 204, a home office 206, and a driveway 208. Work environment 250 may include a work office 252. Home environment 210 and work environment 250 may include more, fewer, or different locations other than those shown in FIG. 2.

In exemplary environment 200, kitchen 202 may include laptop 116, small-screcn TV 112, and second speakers 114; living room 204 may include phone 118, wide-screen TV 108, and first speakers 110; home office 206 may include home server 104 and home printer 106; driveway 208 may include car 120.

### EXEMPLARY DEVICE

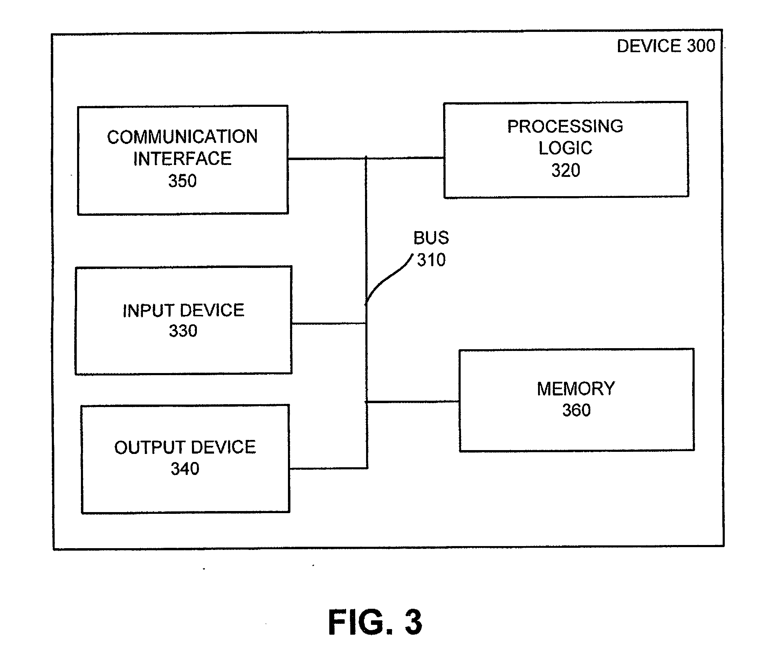

FIG. 3 is a block diagram of exemplary components of a device, such as any one of devices 104-154 associated with personal network 100 in FIG. 1. Device 300 may include a bus 310, processing logic 320, an input device 330, an output device 340, a communication interface 350, and a memory 360. Device 300 may include other components (not shown) that aid in receiving, transmitting, and/or processing data. Moreover, other configurations of components in device 300 are possible. Further, one or more components of device 300 may be remotely located.

Bus 310 may include a path that permits communication among the components of device 300. Processing logic 320 may include any type of processor or microprocessor (or groups of processors or microprocessors) that interprets and executes instructions. In other embodiments, processing logic 320 may include an application-specific integrated circuit (ASIC), a field-programmable gate array (FPGA), or the like.

Input device 330 may include a device that permits a user to input information into device 300, such as a keyboard, a keypad, a mouse, a pen, a microphone, a remote control, a touch-screen display, one or more biometric mechanisms, or the like.

Output device 340 may include a device that outputs information to the user, such as a display, a printer, a speaker, etc. Output device 340 may include a vibrator to alert a user.

Input device 330 and output device 340 may allow the user of device 300 to receive a menu of options. The menu may allow the user to select various functions or services associated with applications executed by device 300 or other devices coupled to network 102. Input device 330 and output device 340 may allow the user to activate a particular service or application, such as a service defined by a device table described below.

Communication interface 350 may include any transceiver-like mechanism that enables device 300 to communicate with other devices and/or systems. Communication interface 350 may include a transmitter that may convert baseband signals from processing logic 320 to radio frequency (RF) signals and/or a receiver that may convert RF signals to baseband signals. Alternatively, communication interface 350 may include a transceiver to perform functions of both a transmitter and a receiver. Communication interface 350 may be coupled to an antenna for transmission and reception of the RF signals. Communications interface 350 may include a network interface card, e.g., Ethernet card, for wired communications or a wireless network interface (WiFi) card for wireless communications.

Communications interface 350 may include global satellite navigation and positioning system receiver for assisting in the determination of the location of the respective device. Communication interface 350 may also include, for example, a universal serial bus (USB) port for communications over a cable, a Bluetooth wireless interface for communicating with other Bluetooth devices, a near-field communication (NFC) device, etc. Communication interface 350, for example, may send signals, such as Bluetooth signals and/or electromagnetic signals, to other devices within a vicinity of the device 300, such as within 1 meter, 10 meters, 15 meters, 20 meters, 25 meters, or 30 meters, for example. Communications device 350 may receive, transmit and/or process digital or analog audio inputs/outputs and/or digital or analog video inputs/outputs.

Memory 360 may include a random access memory (RAM) or another type of dynamic storage device that may store information and instructions, e.g., an application, for execution by processing logic 320; a read-only memory (ROM) device or another type of static storage device that may store static information and instructions for use by processing logic 320; and/or some other type of magnetic or optical recording medium and its corresponding drive, e.g., a hard disk drive (HDD), for storing information and/or instructions.

Device 300 may perform certain operations, as described in detail below. Device 300 may perform these operations in response to processing logic 320 executing software instructions contained in a computer-readable medium, such as memory 360. A computer-readable medium may be defined as a physical or logical memory device and/or carrier wave. The software instructions may be read into memory 360 from another computer-readable medium or from another device via communication interface 350. The software instructions contained in memory 360 may cause processing logic 320 to perform processes that are described below.

### EXEMPLARY DATA STRUCTURES

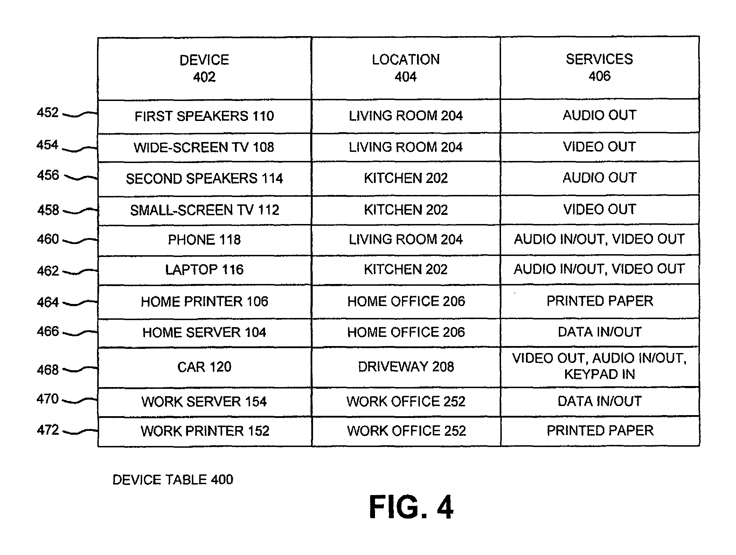

FIG. 4 is a block diagram of an exemplary device table 400. Device table 400, e.g., a database, may define the devices associated with a personal network, such as personal network 100, the locations of the devices, and the services the devices may provide. Device table 400 may be stored, for example, in memory 360 of device 300, or in a memory of any device coupled to network 102. In one embodiment, device table 400 may be stored in memory 360 of home server 104. In one embodiment, portions of device table 400 may be stored in various devices coupled to network 102. Device table 400 may include a device field 402, a location field 404, and a services field 406. Device table 400 may include additional, different, or fewer fields than illustrated in FIG. 4.

Device field 402 may include the name of a device associated with personal network 100. In exemplary device table 400, the devices 104-154 associated with personal network 100 of FIG. 1 are listed in eleven records (records 452 through 472).

Location field 404 may include the location of the device in the corresponding device field 402. In exemplary device table 400, the location (as shown in environment 200 of FIG. 2) of devices 104-154 associated with personal network 100 of FIG. 1 are listed in location field 404 of the eleven records (records 452 through 472).

For mobile devices, such as laptop 116 and mobile phone 118, the location of the device may have to be determined. In one embodiment, location may be determined by GPS. For example, the location of car 120 may be determined by using a GPS navigation device onboard car 120. In another embodiment, location may also be determined using Bluetooth or NFC. For example, personal network 100 may determine that phone 118 is in car 120 when phone 118 pairs (using Bluetooth) with the car 120's audio system. In another embodiment, location may be determined using WiFi. For example, when phone 118 enters kitchen 202, a wireless router in kitchen 202 may determine that phone 118 is in kitchen 202. In another embodiment, location may be determined using information received by one or more cell towers in a mobile communication network (using triangulation, for example). In another embodiment, location may be determined by asking a user of a device and/or user entry. For example, a user may enter his/her location via phone 118 and transmit the location to home server 104. Location may also be determined using a combination of the embodiments described above.

Services field 406 may include the services that the device in the corresponding device field 402 may provide. In exemplary device table 400, services of the devices 104-154 associated with personal network 100 of FIG. 1 are listed in services field 406 of the eleven records (records 452 through 472). Exemplary services may include, among others, audio output (e.g., a speaker playing music), video output (e.g., a monitor displaying a video), printed paper (e.g., a printer outputting paper), audio input (e.g., a microphone), and a keypad input.

Other services not shown in FIG. 4, device table 400, are possible.

As indicated in exemplary device table 400 and consistent with environment 200 of FIG. 2. First speakers 110 may be located in living room 204 and its services may include outputting audio (record 452); wide-screen TV 108 may also be located in living room 204 and its services may include outputting video (record 454); second speakers 114 may be located in kitchen 202 and its services may include outputting audio (record 456); small-screen TV 112 may be located in kitchen 202 and its services may include outputting video (record 458); phone 118 may be located in living room 204 and its services may include outputting audio and video and inputting audio (record 460); laptop 116 may be located in kitchen 202 and its services may include outputting video and audio and inputting audio (record 462); home printer 106 may be located in home office 206 and its services may include printing paper (record 464); home server 104 may be located in home office 206 and its services may include inputting (e.g., receiving, storing) and outputting (e.g., retrieving, displaying) data (record 466); car 120 may be located in driveway 208 and its services may include outputting video and audio, inputting audio, and inputting user data from a keypad (record 468); work server 154 may be located in work office 252 and its services may include inputting (e.g., receiving, storing) and outputting (e.g., retrieving, displaying) data (record 470); work printer 152 may be located in work office 252 and its services may include printing to paper (record 472).

Devices and/or services may be added or removed from personal network 100, for example, by adding, removing, or editing entries in device table 400. Such editing of device table 400 may be done, for example, through laptop computer 116 or phone 118.

In one embodiment, a device listed in device table 400 may store the portion of device table 400 that relates to it. For example, first speakers 110 may store record 452; wide-screen TV 108 may store record 454; second speakers 114 may store record 456, etc. In some embodiments, devices may store more than one record, however.

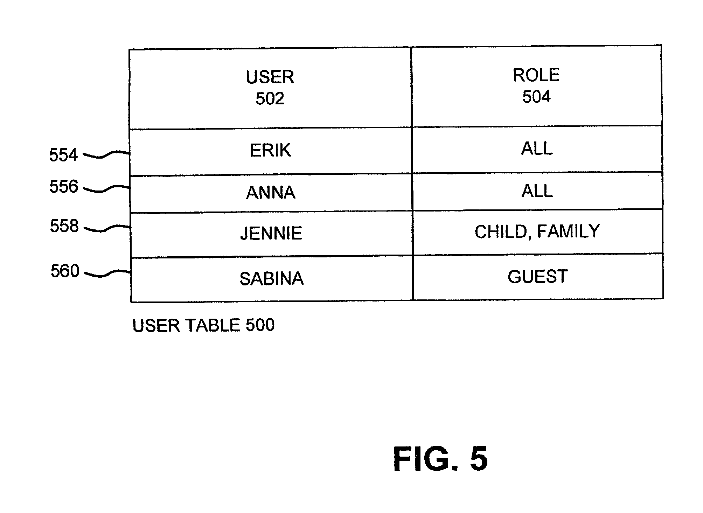

FIG. 5 is a block diagram of an exemplary user table 500. User table 500, e.g., a database, may define the users associated with a personal network, such as personal network 100, and the roles (e.g., set of privileges or permissions) afforded these users. User table 500 may be stored in memory 360 of device 300, e.g., a memory of any device coupled to network 102, among other places. In one embodiment, user table 500 may be stored in memory 360 of home server 104. User table 500 may include a user field 502 and a role field 504. User table 500 may include additional, different, or fewer fields than illustrated in FIG. 5.

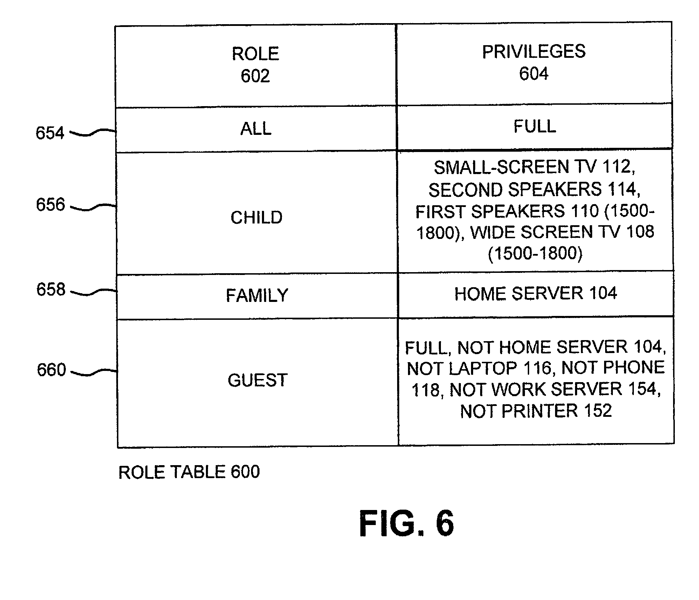

User field 502 may include the name of a user allowed to access personal network 100 in some way. Exemplary user table 500 lists five users that may access personal network 100, including Erik, Anna, Jennie, and Sabina. Role field 504 may include the name of a set of privileges afforded the corresponding user in user field 502. Exemplary user table 500 lists four different roles, including ALL, CHILD, FAMILY, and GUEST. The privileges (e.g., permissions) associated with these roles may be defined in role table 600, described below with respect to FIG. 6.

According to exemplary user table 500, Erik may be afforded the role of ALL (record 554); Anna may be afforded the role of ALL as well (record 556); Jennie may be afforded the role of CHILD and FAMILY (record 558); Sabina may be afforded the role of GUEST (record 560).

The ability of a user to access personal network 100 may be changed by adding, removing, or editing entries in user table 500. Such editing of user table 500 may be done, for example, through laptop computer 116 or phone 118.

FIG. 6 is a block diagram of an exemplary role table 600. Role table 600, e.g., a database, may define the set of privileges (e.g., permissions) afforded each role. Role table 600 may be stored in memory 360 of device 300, e.g., a memory of any device coupled to network 102, among other places. In one embodiment, role table 600 may be stored in memory 360 of home server 104. Role table 600 may include a role field 602 and a privileges field 604. Role table 600 may include additional, different, or fewer fields than illustrated in FIG. 6.

Role field 602 may include the name of the role. The name(s) listed in this field may correspond to the roles afforded users in user table 500. Exemplary role table 600 may include four roles: ALL, CHILD, FAMILY, and GUEST. These roles are the same four roles listed in user table 500 described above with respect to FIG. 5.

Privileges field 604 may include the privileges (e.g., permissions) afforded the role in the corresponding role field 602. Privileges field 604 may include the devices and services that users having the corresponding role may access. For example, a privileges field 604 including "small-screen TV 112" may indicate permission to access the services of small-screen TV 112. Privileges field 604 may also provide other limitations to permissions, such as the time of day access may be allowed. For example, a privileges field 604 including "wide-screen TV 108 (1500-1800)" may indicate permission to access the services of wide-screen TV 108 between the hours of 1500 and 1800. Permissions may be indicated negatively, e.g., by indicating what permissions are not allowed. For example, a permission of "NOT work server 154" may indicate that a lack of permission to access the services of work server 154. Permissions may also be limited to particular services provided by devices. For example, a permissions field 604 including "phone 118 (AUDIO IN)" may indicate permission to access phone 118's audio-in service.

In role table 600, users with the role ALL are provided the privilege of FULL (record 654), e.g., permissions to access all devices and all services on the devices. Users with the role CHILD may be provided the privileges of accessing the services of small-screen TV 112, home server 104, first speakers 110 (between the hours of 1500 and 1800), and wide-screen TV (between the hours of 1500 and 1800) (record 656); users with the role FAMILY may be provided the privileges of accessing the services of home server 104 (record 658); users with the role GUEST may be provided the privilege of FULL, but are not allowed to access home server 104, laptop 116, phone 118, work printer 152, and work server 154 (record 660).

The privileges afforded users with particular roles may be changed, for example, by adding, removing, or editing entries in role table 600. Such editing of role table 600 may be done, for example, through laptop computer 116 or phone 118.

### EXEMPLARY PROCESSESES

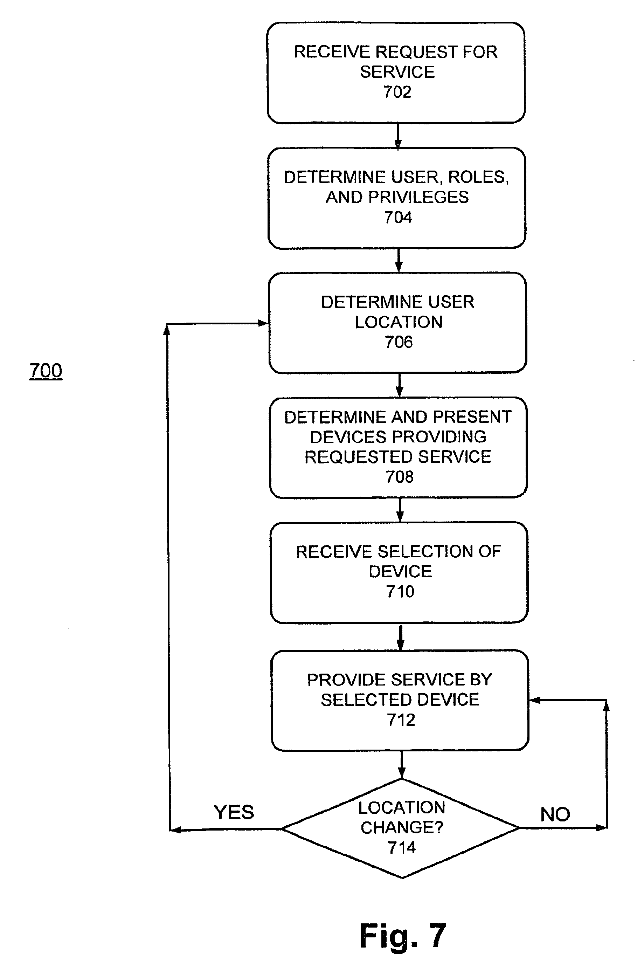

FIG. 7 is a flowchart of an exemplary process 700 for one embodiment. In one embodiment, process 700 may be performed by home server 104. In another embodiment, process 700 may be performed by any device coupled to network 102. In yet another embodiment, process 700 may be performed in a distributed environment by more than one device.

Process 700 may begin with a user requesting a service. For example, Erik may be sitting in living room 204 with his mobile phone 118. Erik may wish to listen to music, e.g., his favorite ABBA song, stored in phone 118. Erik may select his favorite song using phone 118 and may request a service provided by personal network 100, e.g., the service of playing music through a speaker. A request for a service may be received (block 702). In one embodiment, Erik's request to play a song may be received in home server 104. In this embodiment, home server 104 may also store device table 400, user table 500, and role table 600. The identity of the user, the roles of the user, and associated privileges may be determined (block 704). Server 104 may determine that the request is coming from Erik because, for example, Erik is logged into his phone. Accessing user table 500, server 104 may determine that Erik has a role of ALL, which means that Erik has FULL privileges as indicated in role table 600. The location of the user may be determined (block 706). Server 104 may determine that Erik is in living room 204. Server 104 may make this determination because Erik's phone 118 may include a GPS device, for example, and Erik's phone 118 forwarded location information indicating to home server 104 that it is in living room 204. Alternatively, server 104 may determine that Erik's phone 118 is in living room 204 because of relevant WiFi, Bluetooth, NFC, or cellular tower signals.

The devices matching the requested services may be determined (block 708). Server 104 may query device table 400 to determine what devices located near Erik may provide the requested service, e.g., playing music or AUDIO OUT. Server 104 may query device table 400 and determine that the relevant devices are (1) first speakers 110 also in living room 204 that provide an AUDIO OUT service; (2) Erik's own phone 118, also in living room 204 that provides an AUDIO OUT service; (3) second speakers 114 located in kitchen 202 that provide an AUDIO OUT service; and (4) laptop 116 located in kitchen 202 that provides an AUDIO OUT service. Server 104 may determine that the AUDIO OUT service provided by car 120 may not be as relevant because Erik is not in car 120. Options (1) through (4) may be listed on phone 118 in that order, e.g., in order of closest to farthest by location to Erik (block 708). In one embodiment, Erik may ask for or automatically receive all the devices providing the requested service, not just the closest devices.

A selection of the device to provide the requested service may be received (block 710). Erik may select option (1) listed above, e.g., first speakers 110. The service may be provided by the selected device (block 712). Server 104 may instruct the music file on Erik's phone 118 to be output to first speakers 110 for Erik's listening pleasure based on Erik's selection. In one embodiment, music may stream directly from Erik's phone 118 to first speakers 110 after server 104 negotiates a session between phone 118 and server 104. In one embodiment, server 104 may act as a session-initiation protocol (SIP) proxy, for example, to establish a real-time protocol (RTP) session between phone 118 and first speakers 110 for playing music. The RTP streams may travel through network 102 from phone 118 to first speakers 110. The RTP streams may also travel directly from phone 118 to first speakers 110, for example, using Bluetooth or NFC. Protocols other than RTP are possible, e.g., file-transfer protocol (FTP), hypertext transfer protocol (HTTP), Object Exchange (OBEX), Microsoft Media Services (MMS) protocol, etc. In addition, signaling protocols other than SIP are possible, e.g., H.323, etc.

If the user's location does not change (block 714: NO), then the requested service may continue to be provided by the selected device (block 712). For example, as long as Erik remains in living room 204, he may continue to listen to his favorite ABBA song on first speakers 110.

If the user's location changes (block 714: YES), process 700 may return to block 706 where the user's location may be determined again. For example, Erik may go to kitchen 202 to greet his wife, Anna. Home server 104 may re-determine Erik's location as being in kitchen 202 because Erik is carrying his mobile phone 118. Home server 104 may query device table 400 and may provide Erik with a new list of devices to meet the requested service, e.g., AUDIO OUT. These devices may include: (a) second speakers 114 located in kitchen 202 that provide an AUDIO OUT service; (b) Erik's own phone 118, also in kitchen 202 that provides an AUDIO OUT service; (c) laptop 116 located in kitchen 202 that provides an AUDIO OUT service.; and (d) first speakers 110 in living room 204 that provide an AUDIO OUT service. Although these determined devices (when Erik is in kitchen 202) may be the same as when Erik is in living room 204, they may be presented to Erik in a different order (a) through (d) because of Erik's new location. Erik may select a new device, such as second speakers 114 if he wishes the music to follow him to kitchen 202. Erik may select both first speakers 110 and second speakers 114 if he wishes the music to remain playing in living room 204 and also play in kitchen 202. In one embodiment, second speakers 114 may be selected automatically when Erik moves to kitchen 202.

Erik may decide he wants to go for a car ride and enters car 120. Home server 104 may re-determine Erik's location as being in car 120 because Erik is carrying his mobile phone 118 which may be paired (using Bluetooth) with the stereo in car 120. Home server 104 may query device table 400 and may provide Erik with a new list of devices to meet the requested service. These devices may include (1) car 120 that provides AUDIO OUT service, e.g., a car stereo; and (2) Erik's mobile phone 118 itself which provides AUDIO OUT service. Erik may select a new device, e.g., car 120, if he wishes the music to follow him to car 120. In one embodiment, car 120 may automatically be selected as providing the AUDIO OUT service to Erik when his location is car 120.

In one embodiment, Erik's phone 118 may communicate with local devices and may receive the relevant portions of device table 400. For example, when in living room 204, phone 118 may communicate with first speakers 110 and wide-screen TV 108 and may receive records 452 and 454 that relate to first speakers 110 and wide-screen TV 108. In addition, phone 118 may already have stored record 460, e.g., the record relating to phone 118. Phone 118 may then determine that first speakers 110 and phone 118 are devices that may provide the requested service (block 708) of playing music, e.g., AUDIO OUT. Phone 118 may present these devices to Erik (block 708).

In this embodiment, when Erik moves to kitchen 202, phone 118 may receive record 456 (describing second speakers 114), record 458 (describing small-screen TV), and record 462 (describing laptop 116). Recognizing that its location has changed, phone 118 may determine that the requested service (AUDIO OUT) may be provided by second speakers 114. Phone 118 may present this option to Erik, which he may choose if he wishes. In this embodiment, phone 118 and first speakers 110 may negotiate for a RTP stream, for example, to pass between them without the use of a proxy, such as a SIP proxy.

Thus, the user interface to Erik's phone 118 may change depending on his location, such as living room 204, kitchen 202, or car 210, for example.

In another example, Anna may wish to print a document from laptop 116. After receiving a request of a printing service (block 702), server 104 may determine that the request is coming from Anna because, for example, Anna is logged into laptop 116 (and not, for example, Erik). Server 104 may determine, after querying user table 500 and role table 600, that Anna has a role of ALL and FULL privileges (block 704). Server 104 may determine Anna's location (block 706). Server 104 may determine that Anna is in kitchen 202 because she may be logged into a local LAN in home environment 210. If Anna is in kitchen 202, server 104 may query device table 400 (block 708) and may present Anna with the option to print a document in home environment 210 on printer 106 in home office 206. If Anna is in her work office 252 at work environment 250, however, server 104 may query device table 400 (block 708) and present Anna with the option to print a document in work environment 250 on work printer 152. Server 104 may determine that Anna is in work environment 250 because she may be logged into a LAN at work office 252. In one embodiment, the selection of the device to provide the printing service may be automatic. In another embodiment, if Anna does not like the list of devices provided to perform the requested service, Anna may ask for all devices associated with personal network 100 that may provide the requested service.

Thus, the user interface to Anna's laptop 116 may change depending on her location, such as home environment 210 or work environment 250. In addition, the device may be automatically selected to provide a service based on Anna's location.

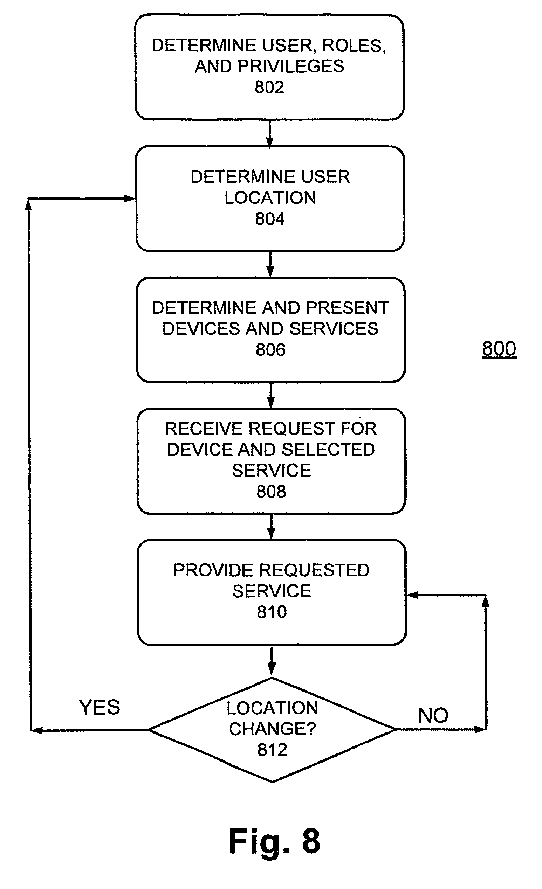

FIG. 8 is a flowchart of an exemplary process 800 for one embodiment. In one embodiment, process 800 may be performed by home server 104. In another embodiment, process 800 may be performed by any device coupled to network 102. In yet another embodiment, process 800 may be performed in a distributed environment by more than one device.

Process 800 may begin with a user requesting available services. For example, Anna's and Erik's daughter Jennie may be home from school at 1500 and may be looking for something to do. Jennie may log into wide-screen TV 108 as a user and may query personal network 100 as to available services. The identity of the user, the roles of the user, and associated privileges may be determined (block 802). Server 104 may determine that Jennie is the user by virtue of her logging into wise-screen TV 108. By querying user table 500, server 104 may determine that user Jennie has the role of CHILD and FAMILY. By querying role table 600, server 104 may determine that Jennie may access the services of home server 104, small-screen TV 112, second speakers 114, wide-screen TV (but only between the hours of 1500 and 1800), and first speakers (but only between the hours of 1500 and 1800).

The location of the user may be determined (block 804). Server 104 may determine that Jennie is in living room 204 by virtue of her logging into wide-screen TV 108. Available devices and services may be determined (block 806). Because of Jennie's location (in living room 204), server 104 may determine that the services available to her include first speakers 110 and wide-screen TV 108 (for playing content) and home server 104 (where content may be stored). The available services may be presented via wide-screen TV 108. A selection of the device and a requested service may be received (block 808). Jennie may select wide-screen TV 108 and first speakers 110 to watch and listen to available content. The service may be provided by the selected device (block 810), e.g., Jennie can channel surf using wide-screen TV 108. If the user's location does not change (block 812: NO), then the requested service may continue to be provided by the selected device (block 810). For example, if Jennie stays logged into wide-screen TV 108, then it will continue to provide content - at least until the hour of 1800 as indicated in Jennie's privileges (e.g., CHILD). If the user's location changes (block 812: YES), then the process may return to block 804 where the user's location may be determined again. For example, if Jennie moves to kitchen 202 and logs into small-screen TV 112, the content Jennie was watching on wide-screen TV 108 may be transferred to small-screen TV 112. In one embodiment, Jennie's movement to kitchen 202 from living room 204 may be determined based on her logging into small-screen TV 112. Alternatively, Jennie's movement to kitchen 202 may be determined by virtue of her cell phone being tracked, for example, from relevant WiFi, Bluetooth, or NFC signals. In one embodiment, Jennie may be prompted before transferring content to small-screen TV 112. In another embodiment, content may be transferred to small-screen TV 112 automatically.

In another example, Erik's and Anna's neighbor, Sabina, may be granted privileges to access personal network 100. When visiting Erik and Anna, Sabina may log into small-screen TV 112 as a user and may query personal network 100 as to available services. By querying user table 500, server 104 may determine that user Sabina has the role of GUEST. By querying role table 600, server 104 may determine that Sabina may have FULL privileges, excluding any privileges to access services of home server 104, laptop 116, Erik's phone 118, work server 154, or work printer 152. Server 104 may determine that Sabina is in kitchen 202 by virtue of Sabina logging into small-screen TV 112. Because of Sabina's location (in kitchen 202), server 104 may determine that the services available to her include (1) small-screen TV 112; and (2) second speakers 114. Sabina could request a list of all the services available to her, not just the ones in her immediate vicinity. In this case, server 104 may list all the services listed in privileges table 600 for GUEST.

In one embodiment, Sabina may log into personal network 100 from her own laptop (not shown), for example, even though her laptop may not be listed in device table 400 and may not be associated with personal network 100. That is, Sabina's laptop computer may not be part of personal network 100 even though it is coupled to network 102. In this embodiment, services may be accessed by a device, such as Sabina's laptop, that are not associated with personal network 100.

Devices associated with personal network 100 may include public devices, such as public printers, public displays, etc. For example, if Erik is a frequent visitor of a public library, he may add the public printer in the library to personal network 100. In this situation, when he has his laptop (not shown) in the library, he may be presented with the public printer as the first choice when he prints a document.

In one embodiment, Erik may be in car 120 with phone 118. Erik may not wish to handle his phone 118 while driving, so he may request a user interface service (e.g., VIDEO OUT, KEYPAD IN, or AUDIO IN (for voice recognition)). In this embodiment, car 120 may include VIDEO OUT and KEYPAD/AUDIO IN services. Erik may then effectively move phone 118's user interface to that of car 120 for safe driving.

In one embodiment, a user's preferences may be learned over time. Devices proving services may be presented to a user not only based on location, but based on previous choices by the same user.

### CONCLUSION

Embodiments described herein allow users to define a "personal network." Embodiments described herein may allow devices associated with the personal network and the services that these devices provide to the users to be defined. In addition, embodiments described herein may define users permitted to access the services and devices may also be defined. Further, embodiments described herein may limit the roles and privileges of users' access to the personal network.

The foregoing description of embodiments provides illustration and description, but is not intended to be exhaustive or to limit the invention to the precise form disclosed. Modifications and variations are possible in light of the above teachings.

For example, while series of blocks have been described with regard to some figures, the order of the blocks may be modified in other embodiments. Further, non-dependent acts may be performed in parallel.

The term "comprises/comprising" when used in this specification is taken to specify the presence of stated features, integers, steps or components but does not preclude the presence or addition of one or more other features, integers, steps, components or groups thereof.

It will be apparent that aspects of the invention, as described above, may be implemented in many different forms of software, firmware, and hardware in the embodiments illustrated in the figures. The actual software code or specialized control hardware used to implement aspects consistent with principles of the invention is not limiting of the invention. Thus, the operation and behavior of the aspects were described without reference to the specific software code--it being understood that one would be able to design software and control hardware to implement the aspects based on the description herein.

No element, act, or instruction used in the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A method performed by a device in a personal network (100) that includes a plurality of devices, the method comprises the steps of:
- *receiving* (702) a request, from a mobile device, for a service provided by the personal network (100);
- *determining* (706) a location of the mobile device;
- *determining (708),* based on the location of the mobile device, more than one device, of the plurality of devices, capable of providing the requested service;
- *providing* information to the mobile device regarding the more than one device capable of providing the requested service, the information including a list that includes information identifying the more than one device;
- *receiving* (710) a selection from the mobile device for one of the more than one device for providing the requested service; and
- *providing* (712) the service by the selected device. **Characterized in that** the information identifying the more than one device being ordered in the list from the closest to farthest by location to the device.

2. The method of claim 1, wherein determining the more than one device capable of providing the requested service includes:
determining the more than one device based on privileges or roles associated with a user of the mobile device.

3. The method of claim 1, wherein the service comprises one or more of playing audio, playing video, printing, storing data, viewing pictures, or retrieving data.

4. The method of claim 1, further comprising:
- *re-determining* the location of the mobile device; and
- *re-determining,* if the location of the mobile device has changed, devices capable of providing the requested service;
- *providing* information to the mobile device regarding the re-determined devices capable of providing the requested service; and
- *receiving* a new selection from the mobile device for one of the re-determined devices for providing the requested service.

5. The method of claim 4, wherein the service comprises one or more of playing audio, playing video, printing, storing data, viewing pictures, or retrieving data.

6. The method of claim 4, wherein re-determining the devices capable of providing the requested service includes:
re-determining the devices based on privileges or roles associated with a user of the mobile device.

7. The method of claim 4, wherein providing information to the mobile device regarding the re-determined devices capable of providing the requested service includes:
providing information indicating devices located closest to the mobile device.

8. A system in a personal network (100) that includes a plurality of devices, the system comprising:
a storage medium to store a database regarding the plurality of devices, a plurality of services provided by the plurality of devices, and locations of the plurality of devices;
a receiver to receive a request (702), from a device of the plurality of devices, for a service of the plurality of services; and
a processor to:
determine a location of the device (706); and
determine (708) based on the location of the device and information in the database, more than one device capable of providing the requested service;
a transmitter to:
provide information (710) to the device regarding the more than one device capable of providing the requested service, the information including a list that includes information identifying the more than one device.
**Characterized in that**, the information identifying the more than one device being ordered in the list from closest to farthest by location to the device.

9. The system of claim 8, wherein the processor determines the more than one device capable of providing the requested service based on at least one of privileges or roles associated with a user of the device.

10. The system of claim 8, wherein the receiver receives a selection from the device for one of the more than one device for providing the requested service; and
wherein the service comprises one or more of playing audio, playing video, printing, storing data, viewing pictures, or retrieving data.

11. The system of claim 8, wherein the processor:
re-determines the location of the device; and
if the location of the device has changed,
re-determines, based on the changed location of the device, devices, of the plurality of devices, capable of providing the requested service; and
provides information to the device regarding the re-determined devices capable of providing the requested service; and
wherein the receiver receives a new selection from the device for one of the re-determined devices for providing the requested service.

12. The system of claim 11, wherein the service comprises one or more of playing audio, playing video, printing, storing data, viewing pictures, or retrieving data.

13. The system of claim 11, wherein the processor re-determines the devices based on privileges or roles associated with a user of the device.

14. The system of claim 11, wherein the processor provides information indicating the re-determined devices located closest to the device.

## Patentansprüche

1. Verfahren, welches durch eine Vorrichtung in einem persönlichen Netz (100) durchgeführt wird, das mehrere Vorrichtungen umfasst, wobei das Verfahren die Schritte umfasst:
- *Empfangen* (702) einer Anfrage von einer mobilen Vorrichtung für einen Dienst, welcher durch das persönliche Netz (100) bereitgestellt wird;
- *Bestimmen* (706) eines Standorts der mobilen Vorrichtung;
- *Bestimmen* (708) von mindestens zwei Vorrichtungen der mehreren Vorrichtungen, welche abhängig von dem Standort der mobilen Vorrichtung zum Bereitstellen des angefragten Dienstes in der Lage sind;
- *Bereitstellen* einer Information zu der mobilen Vorrichtung bezüglich der mindestens zwei Vorrichtungen, welche in der Lage sind, den angefragten Dienst bereitzustellen, wobei die Information eine Liste umfasst, welche eine Information, die die mindestens zwei Vorrichtungen identifiziert, umfasst;
- *Empfangen* (710) einer Auswahl von der mobilen Vorrichtung für eine der mindestens zwei Vorrichtungen zum Bereitstellen des angefragten Dienstes; und
- *Bereitstellen* (712) des Dienstes durch die ausgewählte Vorrichtung,
**dadurch gekennzeichnet,**
**dass** die Information, welche die mindestens zwei Vorrichtungen identifiziert, in der Liste abhängig von dem Standort von der nächsten bis zu der am weitesten entfernten bezüglich der Vorrichtung geordnet ist.

2. Verfahren nach Anspruch 1, **dadurch gekennzeichnet, dass** das Bestimmen der mindestens zwei Vorrichtungen, welche in der Lage sind, den angefragten Dienst bereitzustellen, umfasst:
Bestimmen der mindestens zwei Vorrichtungen abhängig von Privilegien oder Rollen, welche einem Benutzer der mobilen Vorrichtung zugeordnet sind.

3. Verfahren nach Anspruch 1, **dadurch gekennzeichnet, dass** der Dienst einen oder mehrere umfasst aus Abspielen von Audiodaten, Abspielen eines Videos, Drucken, Speichern von Daten, Anschauen von Bildern und Abrufen von Daten.

4. Verfahren nach Anspruch 1, **dadurch gekennzeichnet, dass** das Verfahren darüber hinaus umfasst:
- *Neubestimmen* des Standorts der mobilen Vorrichtung; und
- *Neubestimmen* der Vorrichtungen, welche in der Lage sind, den angefragten Dienst bereitzustellen, wenn der Standort der mobilen Vorrichtung verändert worden ist,
- *Bereitstellen* der Information zu der mobilen Vorrichtung bezüglich der neu bestimmten Vorrichtungen, welche in der Lage sind, den angefragten Dienst bereitzustellen; und
- *Empfangen* einer neuen Auswahl von der mobilen Vorrichtung für eine der neu bestimmten Vorrichtungen zum Bereitstellen des angefragten Dienstes.

5. Verfahren nach Anspruch 4, **dadurch gekennzeichnet, dass** der Dienst einen oder mehrere umfasst aus Abspielen von Audiodaten, Abspielen eines Videos, Drucken, Speichern von Daten, Anschauen von Bildern und Abrufen von Daten.

6. Verfahren nach Anspruch 4, **dadurch gekennzeichnet, dass** das Neubestimmen der Vorrichtungen, welche in der Lage sind, den angefragten Dienst bereitzustellen, umfasst:
Neubestimmen der Vorrichtungen abhängig von Privilegien oder Rollen, welche einem Benutzer der mobilen Vorrichtung zugeordnet sind.

7. Verfahren nach Anspruch 4, **dadurch gekennzeichnet, dass** das Bereitstellen einer Information zu der mobilen Vorrichtung bezüglich der neu bestimmten Vorrichtungen, welche in der Lage sind, den angefragten Dienst bereitzustellen, umfasst:
Bereitstellen einer Information, welche Vorrichtungen anzeigt, die sich am dichtesten an der mobilen Vorrichtung befinden.

8. System in einem persönlichen Netz (100), welches mehrere Vorrichtungen umfasst, wobei das System umfasst:
ein Speichermedium, um eine Datenbasis bezüglich der mehreren Vorrichtungen, mehrere Dienste, welche durch die mehreren Vorrichtungen bereitgestellt sind, und Standorte der mehreren Vorrichtungen zu speichern;
einen Empfänger, um eine Anfrage von einer Vorrichtung der mehreren Vorrichtungen nach einem Dienst der mehreren Dienste zu empfangen (702); und
einen Prozessor, um:
einen Standort der Vorrichtung zu bestimmen (706); und
abhängig von dem Standort der Vorrichtung und einer Information in der Datenbank mindestens zwei Vorrichtungen zu bestimmen, welche in der Lage sind, den angefragten Dienst bereitzustellen;
einen Sender, um:
der Vorrichtung bezüglich der mindestens zwei Vorrichtungen, welche in der Lage sind, den angefragten Dienst bereitzustellen, eine Information bereitzustellen, wobei die Information eine Liste umfasst, welche eine Information umfasst, die die mindestens zwei Vorrichtungen identifiziert,
**dadurch gekennzeichnet,**
**dass** die Information, welche die mindestens zwei Vorrichtungen identifiziert, in der Liste abhängig von dem Standort von der nächsten bis zu der am weitesten entfernten bezüglich der Vorrichtung geordnet ist.

9. System nach Anspruch 8, **dadurch gekennzeichnet, dass** der Prozessor die mindestens zwei Vorrichtungen, welche in der Lage sind, den angefragten Dienst bereitzustellen, abhängig von zumindest einem der Privilegien oder Rollen, welche einem Benutzer der Vorrichtung zugeordnet sind, bestimmt.

10. System nach Anspruch 8,
**dadurch gekennzeichnet,**
**dass** der Empfänger eine Auswahl von der Vorrichtung für die mindestens zwei Vorrichtungen zum Bereitstellen des angefragten Dienstes empfängt; und
**dass** der Dienst einen oder mehrere umfasst aus Abspielen von Audiodaten, Abspielen eines Videos, Drucken, Speichern von Daten, Anschauen von Bildern und Abrufen von Daten.

11. System nach Anspruch 8, **dadurch gekennzeichnet, dass** der Prozessor:
den Standort der Vorrichtung neu bestimmt; und
wenn sich der Standort der Vorrichtung verändert hat, die mehreren Vorrichtungen, welche in der Lage sind, den angefragten Dienst bereitzustellen, abhängig von dem geänderten Standort der Vorrichtung neu bestimmt; und
eine Information der Vorrichtung bezüglich der neu bestimmten Vorrichtungen bereitstellt, welche in der Lage sind, den angefragten Dienst bereitzustellen; und
wobei der Empfänger eine neue Auswahl von der Vorrichtung für eine der neu bestimmten Vorrichtungen zum Bereitstellen des angefragten Dienstes empfängt.

12. System nach Anspruch 11, **dadurch gekennzeichnet, dass** der Dienst einen oder mehrere umfasst aus Abspielen von Audiodaten, Abspielen eines Videos, Drucken, Speichern von Daten, Anschauen von Bildern und Abrufen von Daten.

13. System nach Anspruch 11, **dadurch gekennzeichnet, dass** der Prozessor die Vorrichtungen abhängig von Privilegien oder Rollen, welche einem Benutzer der Vorrichtung zugeordnet sind, neu bestimmt.

14. System nach Anspruch 11, **dadurch gekennzeichnet, dass** der Prozessor eine Information bereitstellt, welche die neu bestimmten Vorrichtungen, die sich am dichtesten an der Vorrichtung befinden, anzeigt.

## Revendications

1. Procédé exécuté par un dispositif sur un réseau personnel (100) qui comprend une pluralité de dispositifs, le procédé comprenant les étapes consistant à :
- recevoir (702) une demande d'un dispositif mobile, pour un service fourni par le réseau personnel (100) ;
- déterminer (706) une position du dispositif mobile ;
- déterminer (708), sur la base de la position du dispositif mobile, plusieurs dispositifs capables de fournir le service demandé, parmi la pluralité de dispositifs ;
- fournir des informations au dispositif mobile sur lesdits plusieurs dispositifs capables de fournir le service demandé, les informations comprenant une liste qui inclut des informations identifiant lesdits plusieurs dispositifs ;
- recevoir (710) du dispositif mobile une sélection pour l'un desdits plusieurs dispositifs, afin de fournir le service demandé ; et
- fournir (712) le service par le dispositif sélectionné ;
**caractérisé en ce que** les informations identifiant lesdits plusieurs dispositifs sont classées dans la liste de la position la plus proche à la position la plus lointaine du dispositif.

2. Procédé selon la revendication 1, dans lequel l'étape de détermination desdits plusieurs dispositifs capables de fournir le service demandé comprend l'étape consistant à :
déterminer lesdits plusieurs dispositifs en fonction de privilèges ou de rôles associés à un utilisateur du dispositif mobile.

3. Procédé selon la revendication 1, dans lequel le service comprend un ou plusieurs des suivants : lecture audio, lecture vidéo, impression, sauvegarde de données, visualisation d'images et extraction de données.

4. Procédé selon la revendication 1, comprenant en outre les étapes consistant à :
- re-déterminer la position du dispositif mobile ; et
- si la position du dispositif mobile a changé, re-déterminer des dispositifs capables de fournir le service demandé ;
- fournir au dispositif mobile des informations sur les dispositifs re-déterminés capables de fournir le service demandé ; et
- recevoir du dispositif mobile une nouvelle sélection d'un des dispositifs re-déterminés, pour fournir le service demandé.

5. Procédé selon la revendication 4, dans lequel le service comprend un ou plusieurs des suivants : lecture audio, lecture vidéo, impression, sauvegarde de données, visualisation d'images et extraction de données.

6. Procédé selon la revendication 4, dans lequel l'étape de re-détermination des dispositifs capables de fournir le service demandé comprend en outre l'étape consistant à :
re-déterminer les dispositifs en fonction de privilèges ou de rôles associés à un utilisateur du dispositif mobile.

7. Procédé selon la revendication 4, dans lequel l'étape de fourniture au dispositif mobile d'informations concernant les dispositifs re-déterminés capables de fournir le service demandé comprenant en outre l'étape consistant à :
fournir des informations indiquant les dispositifs les plus proches du dispositif mobile.

8. Système, dans un réseau personnel (100) comprenant une pluralité de dispositifs, le système comprenant :
un support de stockage destiné à stocker une base de données concernant la pluralité de dispositifs, une pluralité de services fournis par la pluralité de dispositifs et des positions de la pluralité de dispositifs ;
un récepteur destiné à recevoir d'un dispositif sur la pluralité de dispositifs une demande (702) d'un service parmi la pluralité de services ; et
un processeur destiné à :
déterminer une position du dispositif (706) ; et
sur la base de la position du dispositif et d'informations dans la base de données, déterminer (708) plusieurs dispositifs capables de fournir le service demandé ;
un émetteur destiné à :
fournir des informations (710) au dispositif, concernant lesdits plusieurs dispositifs capables de fournir le service demandé, les informations comprenant une liste qui inclut des informations identifiant lesdits plusieurs dispositifs ;
**caractérisé en ce que** les informations identifiant lesdits plusieurs dispositifs sont classées dans la liste de la position la plus proche à la position la plus lointaine du dispositif.

9. Système selon la revendication 8, dans lequel le processeur détermine lesdits plusieurs dispositifs capables de fournir le service demandé en fonction d'au moins un des privilèges ou rôles associés à un utilisateur du dispositif mobile.

10. Système selon la revendication 8, dans lequel le récepteur reçoit une sélection du dispositif indiquant un desdits plusieurs dispositifs afin de fournir le service demandé ; et
dans lequel le service comprend un ou plusieurs des suivants : lecture audio, lecture vidéo, impression, sauvegarde de données, visualisation d'images et extraction de données.

11. Système selon la revendication 8, dans lequel le processeur :
re-détermine la position du dispositif mobile ; et
si la position du dispositif mobile a changé, re-détermine, sur la base de la position modifiée du dispositif, des dispositifs capables de fournir le service demandé, sur la pluralité de dispositifs ; et
fournit au dispositif des informations sur les dispositifs re-déterminés capables de fournir le service demandé ; et
dans lequel le récepteur reçoit du dispositif une nouvelle sélection d'un des dispositifs re-déterminés, pour fournir le service demandé.

12. Système selon la revendication 11, dans lequel le service comprend un ou plusieurs des suivants : lecture audio, lecture vidéo, impression, sauvegarde de données, visualisation d'images et extraction de données.

13. Système selon la revendication 11, dans lequel le processeur re-détermine les dispositifs en fonction de privilèges ou de rôles associés à un utilisateur du dispositif mobile.

14. Système selon la revendication 11, dans lequel le processeur fournit des informations indiquant les dispositifs re-déterminés les plus proches du dispositif.
